# EUROPEAN PATENT APPLICATION

(11) **EP 2 293 465 A1**
(43) Date of publication of application: **09.03.2011**
(21) Application number: 08800681.2
(22) Date of filing: 27.08.2008
(51) Int. Cl.: H04B 7/14

(54) **A MOBILE STATION RELAY COMMUNICATION SYSTEM AND METHOD**

(30) Priority: 27.05.2008 CN 200810067601
(71) Applicant: ZTE Corporation, Shenzhen, Guangdong 518057 (CN)
(72) Inventor: HU, Yimu, Shenzhen Guangdong 518057 (CN); CHENG, Wei, Shenzhen Guangdong 518057 (CN); LUO, Zhongsheng, Shenzhen Guangdong 518057 (CN)
(74) Representative: Rapisardi, Mariacristina
(86) International application number: PCT/CN2008/072168
(87) International publication number: WO 2009/143678

(57) **Abstract**

Mobile station relay communication system and method are provided. The method includes the following steps: a mobile station communication system using a mode of common frequency sending and receiving to transmit data; a mobile station out of a network and a mobile station in the network connect with each other for communication, and the mobile station in the network forwards the interactive data between the connected mobile station out of the network and the mobile station communication system. The present invention uses communication connection built between the mobile station out of the network and the mobile station in the network, and a TDD transmission mode with the function of common frequency sending and receiving, the mobile station in the network acts as a relay device to forward data to the mobile station out of the network, and thus the relay communication of the mobile station out of the network is realized, and the hardware of the mobile station relay communication system does not need to add other wireless interfaces.

## Description

### Field of the Invention

The present invention relates to the field of mobile communication, and especially to mobile station relay communication system and method.

### Background Art

At present, the transmission manner in a mobile communication system is duplex transmission which is further divided into two modes of frequency division duplex FDD and time division duplex TDD.

For the frequency division duplex FDD, two independent channels are required during operation. One channel is used to transmit information downwardly, and the other channel is used to transmit information upwardly. The two channels have therebetween a protective frequency band to prevent mutual interference between adjacent transmitters and receivers.

For the time division duplex TDD, only one channel is required. The same channel is used regardless of downward or upward information transmission. Since a transmitter and a receiver will not operate at the same time, no interference will be generated therebetween. The FDD mode is mostly used in the earlier stage of mobile communication system, such as GSM and CDMA, different frequency bands are used for receiving and transmitting, and mobile stations are connected together via a wireless interface.

In practice, many mobile stations affected by geographic locations cannot receive network signals, that is, they cannot access to a communication system due to reasons such as network coverage, and we refer to such kind of mobile stations as mobile stations out of network. The mobile stations out of network can realize relay communication through data forwarding by mobile stations in network.

At present, there exists in mobile communication a TDD transmission mode which has a characteristic of common frequency receiving and sending (which refers to that the receiving and transmitting of a mobile station are in the same frequency band, while the receiving and transmitting portions of the mobile station may be at the same frequency point or different frequency points during working), such as the Time Division-Synchronous Code Division Multiple Access TD-SCDMA, and mobile stations can realize complete bi-directional point-to--point communication using this transmission mode.

At present, relevant documents describing a technology in which a mobile station serves as a relay device are as follows: 1. Chinese patent application No. 200480038113.5 entitled "Method and System to Provide A Continuous Wireless Connection Using a Mobile Station as Relay", the technical solution disclosed therein has the following disadvantage: the mobile station needs to maintain communication with a first node and a second node at the same time so as to access to a cellular communication system, that is, the mobile station must be in network, while in practice there are many mobile stations that cannot access to the communication system, which restricts the use of the technology and cannot provide a relay service to mobile stations out of network; 2. Chinese patent application No. 01823899.8 entitled "Mobile Communications Network Using Mobile Station with Relay-Function and Method for Rewarding Relay Activities of Mobile Station", the technical solution disclosed therein has the following disadvantage: the GSM system described in this document does not have the characteristic of common frequency receiving and sending, the mobile station cannot directly receive the wireless signals transmitted from other mobile stations, and a second wireless interface must be added. This increases the cost of the mobile station and makes the structure more complex, and thus the point-to-point communication between mobile stations is greatly restricted.

Hence, the prior art is subjected to improvement and development.

### Summary of the Invention

The present invention aims at solving the technical problem of providing mobile station relay communication system and method, in which a mobile station in network is used as a relay device to forward data to a mobile station out of network via a communication connection built between the mobile station in network and the mobile station out of network, to realize relay communication of the mobile station out of network, and no other wireless interfaces need to be added.

To solve the technical problem, the present invention provides a mobile station relay communication system comprising: at least one mobile station in network, at least one mobile station out of network and at least one mobile station communication system;
the mobile station in network is in the mobile station communication system and is used as a relay device between the mobile station communication system and the mobile station out of network and is used to apply for resources from the mobile station communication system and forward data to the mobile station out of network;
the mobile station out of network is in communication connection with the mobile station in network and is used to receive the forwarded data of the mobile station in network to realize relay communication with the mobile station communication system.

Further, transmission of the mobile station relay communication system uses a time division duplex mode with a function of common frequency receiving and sending.

The present invention also provides a mobile station relay communication system comprising: at least one mobile station in network, at least one mobile station out of network and at least one mobile station communication system;
the mobile station communication system uses a mode of common frequency receiving and sending to transmit data;
the mobile station out of network is in communication connection with the mobile station in network;
the mobile station in network is used to forward data interacted between the connected mobile station out of network and the mobile station communication system.

Further, the mobile station in network is further used to apply for resources from the mobile station communication system after it establishes communication connection with the mobile station out of network; and to perform at the resources as applied for data interaction with the mobile station out of network.

Further, when there are multiple mobile stations out of network, the multiple mobile stations out of network therebetween are in communication connection, wherein at least one mobile station out of network is in communication connection with the mobile station in network.

Further, the mobile station relay communication system uses a time division duplex mode of common frequency receiving and sending to transmit data.

The present invention also provides a mobile station relay communication method, comprising:
a mobile station communication system using a mode of common frequency receiving and sending to transmit data; a mobile station out of network being in communication connection with a mobile station in network, and the mobile station in network forwarding data interacted between the mobile station out of network connected therewith and the mobile station communication system.

Further, the mobile station relay communication method comprises the following steps:
81. establishing communication connection between the mobile station in network and the mobile station out of network;
82. the mobile station in network applying for resources from the mobile station communication system; and
83. the mobile station in network being used as a relay device to forward data interacted between the connected mobile station out of network and the mobile station communication system.

Further, the mobile station relay communication method comprises the following steps:
A. establishing communication connection between the mobile station in network and the mobile station out of network;
B. the mobile station in network applying for resources from the mobile station communication system; and
C. the mobile station in network being used as a relay device to forward data to the mobile station out of network.

Further, the step of establishing communication connection between the mobile station in network and the mobile station out of network further comprises the following step:
A1. establishing communication connection between multiple mobile stations out of network.

Further, subsequent to step C, the following step is included:
D. the mobile station out of network realizing relay communication.

Further, synchronous communication connection is established between the mobile station in network and at least one of the mobile stations out of network; and synchronous communication connection is established between the mobile station out of network and at least one of the mobile stations in network.

The mobile station relay communication system and method provided by the present invention use a communication connection built between the mobile station in network and the mobile station out of network and has the method of the time division duplex transmission mode with the function of common frequency receiving and sending, thus the mobile station in network is enabled to act as a relay device to forward data to the mobile station out of network, and then the relay communication of the mobile station out of network is realized, and in addition, no other wireless interface needs to be added to the hardware of the mobile station relay communication system, and then the structure is relatively simple and the cost increase is small; the transmission quality is also stable and reliable.

### Brief Description of the Accompanying Drawings

Figure 1 is a schematic view of the basic mobile communication system of the present invention;
Figure 2 is a schematic view of the synchronous communication connection between the mobile station in network and multiple mobile stations out of network of the present invention;
Figure 3 is a schematic view of the synchronous communication connection between the mobile station out of network and multiple mobile stations in network of the present invention; and
Figure 4 is a schematic view of the relay communication of a relay mobile station in the present invention.

### Detailed Description of the Invention

The technical solution of the present invention will be described in more details in conjunction with the accompanying drawings and the embodiments.

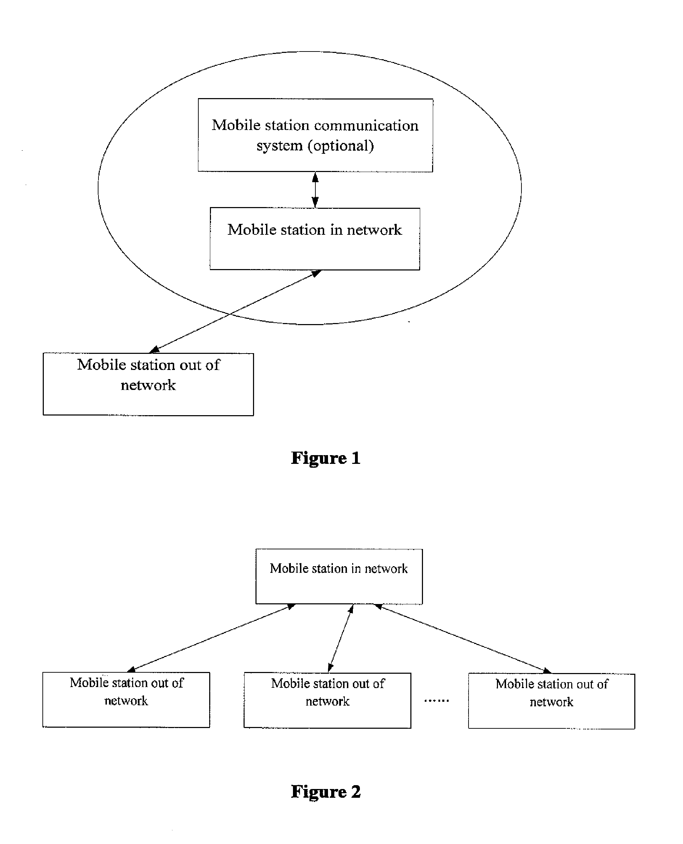

The basic communication of the present invention is shown in Figure 1, and it comprises two or more than two mobile stations and a mobile station communication system to which the mobile stations can access. There can be multiple mobile station communication systems for the selection of the mobile stations, and the mobile stations can selectively access to a desired mobile station communication system. The mobile stations are divided into mobile stations in network and mobile stations out of network according to whether they have accessed to the mobile station communication system, and mobile stations that have accessed to the mobile station communication system are called mobile stations in network while mobile stations that have not accessed to the mobile station communication system are called mobile stations out of network, and the mobile station communication system delivers system information using a mode having a characteristic of common frequency receiving and sending, for example, a time division duplex mode of common frequency receiving and sending, that is, the receiving and the transmitting of a mobile station are in the same frequency band, and within a certain range a transmitted signal of a mobile station can be received and demodulated by other mobile stations.

The present invention provides a mobile station relay communication system comprising: at least one mobile station in network, at least one mobile station out of network and at least one mobile station communication system;
the mobile station communication system uses a mode of common frequency receiving and sending to transmit data;
the mobile station out of network is in communication connection with the mobile station in network for performing data interaction with the mobile station communication system through the mobile station in network connected therewith ; and
the mobile station in network, having accessed to the mobile station communication system, is used as a relay device between the mobile station communication system and the mobile station out of network and to forward data interacted between the connected mobile station out of network and the mobile station communication system.

That the mobile station in network forwards data interacted between the connected mobile station out of network and the mobile station communication system specifically refers to: forwarding to the mobile station out of network the received data that is sent to the mobile station out of network by the mobile station communication system; and forwarding to the mobile station communication system the received data that is sent to the mobile station communication system by the mobile station out of network.

The mobile station in network is further used to apply for resources from the mobile station communication system after it establishes communication connection with the mobile station out of network; and to perform data interaction at the applied resources with the mobile station out of network.

In the range of one or several adjacent cells, it is usual that a part of communication resources is not used, and for a typical cellular communication system, such unused communication resources mainly comprise frequency, time slot, spread spectrum code and etc., and combinations thereof, which are managed and allocated by the mobile station communication system to support direct communication between mobile stations. It needs to be noted that in direct communication resources allocated to the mobile stations the scope of frequency points does not go beyond the receiving and sending frequency band of the mobile stations.

In a cellular communication system, the transmitting power and the receiving sensitivity of a mobile station are both higher than a general short-distance communication system, and when there are enough system resources, not only bi-directional voice call of the mobile stations out of network can be realized, but also medium-distance point-to-point data transmission between mobile stations out of network can be realized, which is a breakthrough of the distance restriction of technologies such as Bluetooth; also In addition, no other wireless interface needs to be added to the hardware of the mobile station relay communication system, and thus the structure is relatively simple and the cost increase is small; the transmission quality is also stable and reliable.

That the mobile station in network establishes communication connection with the mobile station out of network comprises two situations: one is initiated by the mobile station in network, and the other is initiated by the mobile station out of network.

The situation initiated by the mobile station in network can be that: when a part of the mobile stations is out of network, the mobile station communication system cannot page a target party, and there must be a synchronous search process. To make the overall communication system stable, a system communication protocol regulates specific synchronous search resources, such as dividing scopes of frequency points, spread spectrum code and etc. The mobile station out of network performs broadcasting (which carries an equipment identifier of this mobile station) at the synchronous search resources regulated by the protocol, and when the mobile station communication system cannot page the target party, the mobile station in network searches the synchronous search resources regulated by the protocol, and if it finds a mobile station out of network whose equipment identifier matches the paged target party, it establishes communication connection with the mobile station out of network.

When a mobile station does not access to the mobile station communication system, that is, a mobile station out of network, when the mobile station out of network needs to access, it first establishes an air wireless interface communication connection with a mobile station in network; specifically speaking, it comprises that: the mobile station in network performs broadcasting (which carries the equipment identifier of this mobile station); the mobile station out of network searches signals in a broadcast channel when it cannot access to the network, obtains mobile stations in network that it can be connected with, and then selects one mobile station in network for communication connection; a certain selecting policy can be regulated according to practical needs, for example, selecting the first searched mobile station in network, or selecting a closest mobile station in network, and etc.

After the mobile station out of network has established the communication connection with the mobile station in network, the mobile station in network applies and obtains mobile station direct communication resources from the mobile station communication system, the mobile station in network is used as a relay device after obtaining the mobile station direct communication resources to forward to the mobile station out of network the data sent by the mobile station communication system to the mobile station out of network, and forwards to the mobile station communication system the data sent by the mobile station out of network to the mobile station communication system; some services, such as voice call, between the mobile station out of network and the mobile station communication system are supported, and the communication, such as data transmission, between the mobile station in network and the mobile station out of network is also supported. After the communication connection between the mobile stations has been established, regardless of whether the mobile station out of network needs to communicate with the mobile station communication system, the mobile station in network and the mobile station communication system maintain the communication connection therebetween and deliver necessary information, such as a control signaling. Hence, when the resources of the mobile station communication system are enough, and when the mobile station in network is performing operations such as cell handoff, the communication connection between the mobile stations is still maintained.

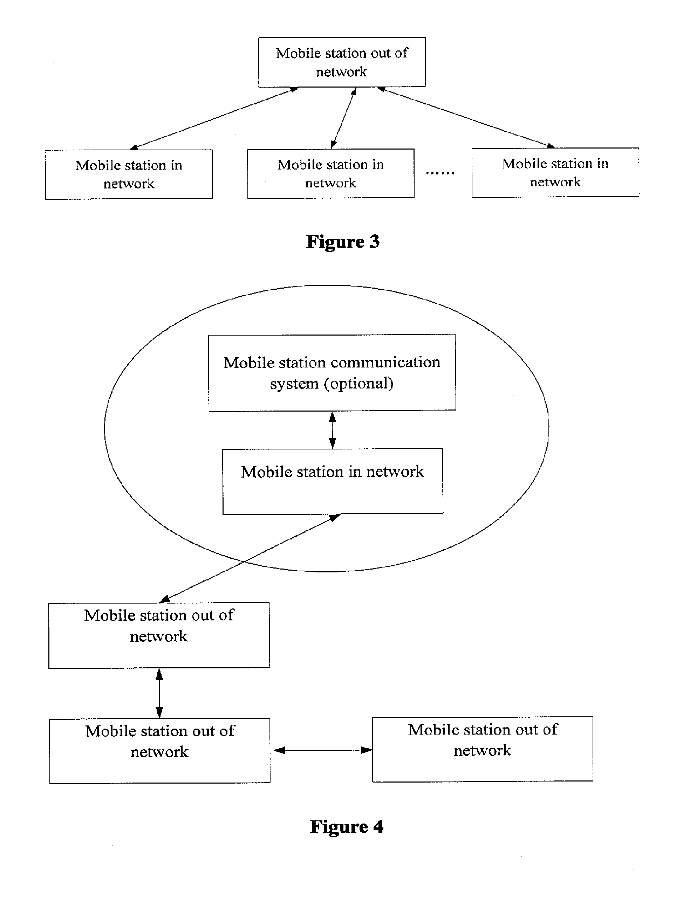

The mobile station in network can establish synchronous communication connection with multiple mobile stations out of network, which is shown in Figure 2, and at the same time, the mobile station out of network can also establish synchronous communication connection with multiple mobile stations in network, which is shown in Figure 3. However, this does not mean that one mobile station can simultaneously perform delivery of voice, data and etc. with multiple mobile stations.

For the mobile station in network and the mobile station out of network that are connected together, the mobile station direct communication resources used therebetween had better be different from (but not limited to this) those used between another group of mobile station in network and mobile station out of network that are connected together.

When there are multiple mobile stations out of network, they can be sequentially communication-connected to form cascade communication connection using the method of performing synchronous search based on the specific synchronous search resources regulated by the communication protocol of the mobile station communication system, and the multiple mobile stations out of network selectively access to a desired mobile station communication system via a relay manner of one or more mobile stations in network, as shown in Figure 4, a relay communication by relay mobile station is formed, that is, multiple mobile stations out of network are communication-connected together, wherein at least one mobile station out of network is communication-connected with a mobile station in network (the step of "establishing communication connection between multiple mobile stations out of network" and the step of "establishing communication connection with the mobile station in network" may be in a random order and can even be performed alternatively); herein, a mobile station out of network can also be used as a relay; the direct communication resources between two mobile stations out of network should be obtained by applying for the same from the mobile station communication system.

The wireless communication interface between the mobile station in network and the mobile station out of network, the wireless communication interface between the mobile station in network and the mobile station communication system and the wireless communication interface between the mobile stations out of network can be identical or different, while when the wireless communication interfaces are identical, the resources in the mobile station communication system such as frequency points, spread spectrum code and time slots can be different to avoid mutual interference therebetween.

The communication between the mobile stations and the communication between the mobile stations and the mobile station communication system comprises voice, data services, and etc., and the types of specific service supported depend on the resource situation of the mobile station communication system.

Alternatively, the mobile station relay communication system uses a time division duplex mode having the function of common frequency receiving and sending to transmit data.

The present invention also discloses a method for performing mobile station relay communication in the above mobile station relay communication system, comprising:
a mobile station communication system using a mode of common frequency receiving and sending to transmit data; a mobile station out of network being in communication connection with a mobile station in network, and the mobile station in network forwarding data interacted between the mobile station out of network connected therewith and the mobile station communication system.

Alternatively, the method specifically comprises:
A. establishing communication connection between the mobile station in network and the mobile station out of network;
B. the mobile station in network applying for resources from the mobile station communication system; and
C. the mobile station in network being used as a relay device to forward data interacted between the connected mobile station out of network and the mobile station communication system.

Alternatively, step A can further comprise:
A1. establishing communication connection between multiple mobile stations out of network.

Alternatively, subsequent to step C, the following step is included:
D. the mobile station out of network realizing relay communication.

The implementation details in the method are the same with the above system, and are omitted here.

The embodiments of the present invention are not limited to those mentioned above, and for a person skilled in the art, corresponding equivalent variations or substitutions can be performed according to the method and the thought of the present invention, and all such variations or substitutions should be contained within the scope of protection of the present invention. Hence, the above embodiments should not be construed as restrictions on the scope of protection of the present invention which shall be based on the annexed claims of the present invention.

### Industrial Applicability

Since the present invention uses the communication connection built between the mobile station in network and the mobile station out of network and between the mobile station in network and the mobile station communication system and the method of the time division duplex transmission mode having the function of common frequency receiving and sending, the mobile station in network is used as a relay device to forward data to the mobile station out of network, and then the relay communication of the mobile station out of network is realized. In addition, no other wireless interfaces need to be added to the hardware of the mobile station relay communication system, and thus the structure is relatively simple and the cost increase is small; the transmission quality is also stable and reliable.

## Claims

1. A mobile station relay communication system, comprising: at least one mobile station in network, at least one mobile station out of network and at least one mobile station communication system;
the mobile station in network, is in the mobile station communication system and used as a relay device between the mobile station communication system and the mobile station out of network, is configured to apply for resources from the mobile station communication system and forward data to the mobile station out of network; and
the mobile station out of network, in communication connection with the mobile station in network, , is configured to receive the forwarded data of the mobile station in network to realize relay communication with the mobile station communication system.

2. The mobile station relay communication system according to claim 1, **characterized in that** the transmission of the mobile station relay communication system uses a time division duplex mode with a function of common frequency receiving and sending.

3. A mobile station relay communication system, comprising: at least one mobile station in network, at least one mobile station out of network and at least one mobile station communication system;
the mobile station communication system uses a mode of common frequency receiving and sending to transmit data;
the mobile station out of network is in communication connection with the mobile station in network; and
the mobile station in network is configured to forward data interacted between the connected mobile station in network and the mobile station communication system.

4. The mobile station relay communication system according to claim 3, **characterized in that** the mobile station in network is further configured to apply for resources from the mobile station communication system after it establishes the communication connection with the mobile station out of network; and to perform data interaction at the applied resources with the mobile station out of network.

5. The mobile station relay communication system according to claim 3 or 4, **characterized in that** when there are multiple mobile stations out of network, the multiple mobile stations out of network are in communication connection therebetween, wherein at least one mobile station out of network is in communication connection with the mobile station in network.

6. The mobile station relay communication system according to any one of claims 3-5, **characterized in that** the mobile station relay communication system uses a time division duplex mode of common frequency receiving and sending to transmit data.

7. A mobile station relay communication method, comprising:
a mobile station communication system using a mode of common frequency receiving and sending to transmit data; a mobile station out of network being in communication connection with a mobile station in network, and the mobile station in network forwarding data interacted between the mobile station out of network connected therewith and the mobile station communication system.

8. The mobile station relay communication method according to claim 7, **characterized by**, comprising the following steps:
81. establishing communication connection between the mobile station in network and the mobile station out of network;
82. the mobile station in network applying for resources from the mobile station communication system; and
83. the mobile station in network being used as a relay device to forward data interacted between the connected mobile station out of network and the mobile station communication system.

9. The mobile station relay communication method according to claim 7, **characterized by**, comprising the following steps:
A. establishing communication connection between the mobile station in network and the mobile station out of network;
B. the mobile station in network applying for resources from the mobile station communication system; and
C. the mobile station in network being used as a relay device to forward data to the mobile station out of network.

10. The method according to claim 8 or 9, **characterized in that** the step of establishing communication connection between the mobile station in network and the mobile station out of network further comprises the following step:
A1. establishing communication connection between multiple mobile stations out of network.

11. The method according to claim 9, **characterized in that** subsequent to step C, the following step is included:
D. the mobile station out of network realizing relay communication.

12. The method according to any one of claims 9 to 11, **characterized in that** synchronous communication connection is established between the mobile station in network and at least one of the mobile stations out of network; and synchronous communication connection is established between the mobile station out of network and at least one of the mobile stations in network.
